(19) Europäisches Patentamt
European Patent Office
Office européen des brevets

(11) **EP 2 738 383 B1**

(12) **EUROPÄISCHE PATENTSCHRIFT**

(45) Veröffentlichungstag und Bekanntmachung des Hinweises auf die Patenterteilung:
**18.05.2016 Patentblatt 2016/20**

(51) Int Cl.:
*F03D 80/00* *(2016.01)* *F03D 1/06* *(2006.01)*

(21) Anmeldenummer: **12008055.1**

(22) Anmeldetag: **30.11.2012**

(54) **Windenergieanlagenrotorblatt mit einem elektrischen Heizelement**

Wind energy assembly rotor blade with an electrical heating element

Pale de rotor d'éolienne dotée d'un élément chauffant électrique

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**04.06.2014 Patentblatt 2014/23**

(73) Patentinhaber: **Nordex Energy GmbH**
**22419 Hamburg (DE)**

(72) Erfinder:
• **Rautmann, Christof**
**22303 Hamburg (DE)**

• **Schmidt, Thorsten**
**22419 Hamburg (DE)**

(74) Vertreter: **Hauck Patentanwaltspartnerschaft mbB**
**Postfach 11 31 53**
**20431 Hamburg (DE)**

(56) Entgegenhaltungen:
**US-A- 5 971 323    US-B1- 6 612 810**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft ein Windenergieanlagenrotorblatt mit einer Blattwurzel, einer Blattspitze und einem elektrischen Heizelement, das ein blattwurzelseitiges Ende an einer ersten Radiusposition des Rotorblatts und ein blattspitzenseitiges Ende an einer zweiten Radiusposition des Rotorblatts aufweist und dazu ausgebildet ist, zwischen dem blattwurzelseitigen Ende und dem blattspitzenseitigen Ende von einem elektrischen Heizstrom durchströmt zu werden.

In vielen Klimaregionen ist eine Beheizung der Rotorblätter von Windenergieanlagen sinnvoll, um einer Vereisung des Rotorblatts vorzubeugen oder entgegenzuwirken. Dadurch können Ertragseinbußen infolge einer Vereisung, sei es durch ein hierdurch erzwungenes Abschalten der Anlage oder durch eine Leistungsminderung, vermieden werden. Außerdem kann durch die Beheizung eine Gefährdung durch sich vom Rotorblatt lösende Eisbrocken ausgeschlossen werden. Auch ein erhöhter Verschleiß oder gar eine Beschädigung der Anlage infolge zusätzlicher, insbesondere asymmetrischer Belastungen durch den Eisansatz wird vermieden.

Aus dem US-Patent Nr. 6,145,787 ist ein Windenergieanlagenrotorblatt mit mehreren, über die Länge des Rotorblatts verteilt angeordneten elektrischen Heizelementen bekannt geworden. Die Druckschrift WO 2010/028653 A2 zeigt ein Windenergieanlagenrotorblatt mit vergleichbar angeordneten elektrischen Heizelementen, die jeweils von elektrisch leitfähigen Nanopartikeln gebildet werden.

Aus der Druckschrift WO 2011/127997 A1 ist ein Windenergieanlagenrotorblatt mit einem elektrischen Heizelement in Form einer schlaufenförmig angeordneten Heizmatte bekannt geworden.

Aus der Druckschrift WO 2007/138452 A2 ist ein Windenergieanlagenrotorblatt bekannt geworden, das mit Warmluft beheizt werden kann. Die Warmluft strömt aus dem Inneren des Rotorblatts durch eine Vielzahl von Öffnungen an dessen Außenseite. Durch gezieltes Verschließen einzelner Öffnungen kann beeinflusst werden, welche Bereiche des Rotorblatts auf diese Weise beheizt werden.

Die Druckschrift US 6,612,810 B1 betrifft ein Windenergieanlagenrotorblatt mit einer elektrischen Heizeinrichtung. Die Heizeinrichtung weist mehrere trapezförmige Heizelemente auf, die sich über unterschiedliche Längsabschnitte des Rotorblatts erstrecken. Jedes Heizelement wird quer zur Längsrichtung des Rotorblatts mit einem elektrischen Heizstrom versorgt.

Davon ausgehend ist es die Aufgabe der Erfindung, ein Windenergieanlagenrotorblatt mit einem elektrischen Heizelement zur Verfügung zu stellen, dessen Heizleistung bedarfsgerecht über die Länge des Rotorblatts verteilt abgegeben wird.

Diese Aufgabe wird gelöst durch das Windenergieanlagenrotorblatt mit den Merkmalen des Anspruchs 1. Vorteilhafte Ausgestaltungen sind in den sich anschließenden Unteransprüchen angegeben.

Das Windenergieanlagenrotorblatt hat eine Blattwurzel, eine Blattspitze und ein elektrisches Heizelement, das ein blattwurzelseitiges Ende an einer ersten Radiusposition des Rotorblatts und ein blattspitzenseitiges Ende an einer zweiten Radiusposition des Rotorblatts aufweist und dazu ausgebildet ist, zwischen dem blattwurzelseitigen Ende und dem blattspitzenseitigen Ende von einem elektrischen Heizstrom durchströmt zu werden, wobei das Heizelement eine Breite aufweist, die in einem ersten Abschnitt mit zunehmender Radiusposition schneller abnimmt als in einem zweiten Abschnitt, wobei der erste Abschnitt näher an dem blattwurzelseitigen Ende angeordnet ist als der zweite Abschnitt.

Die Radiusposition bezieht sich, wie allgemein üblich, auf die Drehachse einer Rotornabe, mit der das Rotorblatt verbunden ist. Dort befindet sich die Radiusposition Null. Die Radiusposition der Blattspitze des Windenergieanlagenrotorblatts entspricht dann dem halben Rotordurchmesser.

Das elektrische Heizelement erstreckt sich von seinem blattwurzelseitigen Ende zu seinem blattspitzenseitigen Ende und wird im Betrieb zwischen diesen beiden Enden von einem elektrischen Heizstrom durchflossen. Das blattwurzelseitige Ende befindet sich in der Regel in einem Abstand von der Blattwurzel des Windenergieanlagenrotorblatts, beispielsweise an einer Radiusposition im Bereich von etwa 5% bis etwa 40% der Radiusposition der Blattspitze. Das blattspitzenseitige Ende des Heizelements befindet sich an einer zweiten Radiusposition, die größer ist als die erste Radiusposition und sich nahe der Blattspitze befinden kann. Ein zwischen diesen beispielhaft genannten ersten und zweiten Radiuspositionen erstrecktes Heizelement kann die gesamte zu beheizende Länge des Rotorblatts abdecken. Ebenfalls möglich ist es, die insgesamt zu beheizende Länge des Rotorblatts in mehrere Längsabschnitte zu unterteilen, denen jeweils ein Heizelement zugeordnet ist. Auch im Falle einer solchen Verwendung mehrerer, über die Länge des Rotorblatts verteilt angeordneter Heizelemente weist jedes der Heizelemente ein blattwurzelseitiges und ein blattspitzenseitiges Ende auf.

Um von einem elektrischen Heizstrom durchströmt werden zu können, kann das Heizelement an seinen beiden Enden elektrische Anschlüsse aufweisen, die über elektrische Leitungen mit einer elektrischen Energiequelle verbunden werden können. Diese Anschlussleitungen können insbesondere in den Bereich der Blattwurzel geführt sein, um nach Montage des Rotorblatts an einer Rotornabe einfach angeschlossen werden zu können. Sofern mehrere elektrische Heizelemente über die Länge des Rotorblatts verteilt angeordnet sind, können diese jeweils einzeln über elektrische Anschlussleitungen mit einem elektrischen Heizstrom versorgt werden. Ebenfalls möglich ist eine Reihenschaltung der Heizelemente, die dann alle von demselben elektrischen Heizstrom durchströmt werden.

Wie bereits erläutert, wird die Radiusposition im Wesentlichen entlang der Längsrichtung des Rotorblatts, von dessen Blattwurzel zu dessen Blattspitze hin, betrachtet. Die Breite des Heizelements wird senkrecht dazu gemessen, jeweils in einer an der betreffenden Radiusposition angeordneten Querschnittsebene. Dabei wird eine Krümmung des Heizelements entlang dem aerodynamischen Profil des Rotorblatts berücksichtigt d.h., die Breite wird dem tatsächlichen Verlauf des Heizelements in der betrachteten Querschnittsebene folgend gemessen.

Die Erfindung beruht auf zwei Erkenntnissen. Zum einen haben die Erfinder erkannt, dass der flächenspezifische Heizleistungsbedarf in weiter außen angeordneten Bereichen des Rotorblatts, nahe der Blattspitze, größer ist als in weiter innen angeordneten Bereichen nahe der Blattwurzel. Dies ist im Wesentlichen auf die im Bereich der Blattspitze größeren Strömungsgeschwindigkeiten zurückzuführen. Bei der Verwendung eines elektrischen Heizelements mit konstanter Breite, dessen flächenspezifische elektrische Leistung über die Länge des Rotorblatts ebenfalls konstant bleibt, kann es nahe der Blattwurzel bereits zu einer Überhitzung kommen, während blattspitzenseitige Bereiche des Heizelements eine noch nicht ausreichende Heizleistung erzeugen. Ziel sollte es sein, dass sich für einen gewählten Betriebspunkt für nahezu alle beheizten Stellen der Blattoberfläche die gleiche Temperaturdifferenz zur Temperatur der Zuströmung einstellt.

Zum anderen haben die Erfinder erkannt, dass die von dem elektrischen Heizelement pro Flächeneinheit erzeugte Heizleistung vom elektrischen Widerstand des betreffenden Längsabschnitts des Heizelements, d.h. im Wesentlichen von der dortigen Breite des Heizelements, beeinflusst wird. So hat beispielsweise eine lokale Verdopplung der Breite des Heizelements eine Halbierung des elektrischen Widerstands zur Folge.

Für den Zusammenhang zwischen elektrischer Leistung P und elektrischem Widerstand R eines Längsabschnitts des Heizelements gilt der bekannte Zusammenhang

$$P = I^2 \times R,$$

wobei I die über das gesamte Heizelement konstante elektrische Stromstärke bezeichnet. Daher ist die elektrische Heizleistung dem elektrischen Widerstand proportional. Gleichzeitig ist der elektrische Widerstand des Heizelements im Wesentlichen umgekehrt proportional zu dessen Breite.

Außerdem ist zu berücksichtigen, dass die Leistung über die gesamte Breite des Heizelements verteilt abgegeben wird. Demnach ist die pro Flächeneinheit des Heizelements abgegebene Leistung ebenfalls umgekehrt proportional zu dessen Breite. Daraus folgt, dass die Leistung des Heizelements pro Flächeneinheit insgesamt näherungsweise umgekehrt proportional zum Quadrat der Breite des Heizelements ist.

Soll nun die pro Flächeneinheit erreichte Leistung des Heizelements mit zunehmender Radiusposition vergrößert werden, ist es zunächst sinnvoll, die Breite des Heizelements mit zunehmender Radiusposition zu verringern.

Zusätzlich wird mit der Erfindung vorgeschlagen, diese Verringerung der Breite über die Länge des Heizelements unterschiedlich stark auszuprägen. Dabei soll die Breite in einem ersten Abschnitt mit zunehmender Radiusposition schneller abnehmen als in einem zweiten Abschnitt, wobei der erste Abschnitt näher an dem blattwurzelseitigen Ende des Heizelements angeordnet ist als der zweite Abschnitt. Dadurch wird erreicht, dass sich die elektrische Leistung des Heizelements pro Fläche von einem kleineren Wert am blattwurzelseitigen Ende hin zu einem größeren Wert am blattspitzenseitigen Ende des Blattes annähernd linear mit dem Radius vergrößert. Dies trägt dem Umstand Rechnung, dass der Heizleistungsbedarf wegen der mit der Radiusposition zunehmenden Strömungsgeschwindigkeiten stetig zunimmt. Dadurch wird insgesamt eine besonders bedarfsgerechte Verteilung der Heizleistung über die Länge des Heizelements erzielt.

Es versteht sich, dass das elektrische Heizelement eine über den ersten Abschnitt und den zweiten Abschnitt hinweg durchgängige Struktur sein kann. Ebenfalls möglich ist eine Unterteilung des Heizelements in den ersten und zweiten Abschnitt und gegebenenfalls weitere Abschnitte, die elektrisch miteinander verbunden sind.

In einer Ausgestaltung sind der erste Abschnitt und/oder der zweite Abschnitt trapezförmig. Dabei verlaufen die beiden parallelen Seitenkanten jedes Trapezes in Breitenrichtung des Heizelements. Die beiden nicht parallelen Seitenkanten des Trapezes verlaufen im Wesentlichen in Längsrichtung des Rotorblatts. Die Verwendung trapezförmiger Abschnitte ist besonders praxisgerecht, da ein entsprechender Zuschnitt der Heizelemente besonders einfach ist. Bevorzugt verläuft eine der nicht parallelen Seitenkanten rechtwinklig zu den parallelen Seitenkanten. Das Heizelement ist dann so angeordnet, dass sich diese Seitenkante entlang der Nasenkante des Rotorblatts erstreckt.

In einer Ausgestaltung weist das Heizelement eine Vielzahl in Längsrichtung des Rotorblatts aneinandergereihter, trapezförmiger Abschnitte auf. Dadurch kann auch ein gekrümmter Verlauf der Breite durch Verwendung einfach herstellbarer Abschnitte gut angenähert werden.

Es versteht sich, dass das mit dem Rotorblatt verbundene Heizelement in der Regel nicht eben, sondern entlang einer gekrümmten Fläche angeordnet ist. Die Trapezform bezieht sich auf ein in einer Ebene ausgebreitetes Heizelement.

In einer Ausgestaltung weist der erste Abschnitt und/oder der zweite Abschnitt eine konkav gekrümmte Längskante auf. Die Verwendung einer konkav gekrümmten Längskante ermöglicht eine mit der Radiusposition stetig abnehmende Breite des Heizelements, wobei sich die "Geschwindigkeit" der Abnahme der Breite mit zunehmender Radiusposition kontinuierlich verringert. Man kann auf diese Weise eine besonders bedarfsgerechte Verteilung der Heizleistung erreichen.

In einer Ausgestaltung weist das Heizelement eine Vielzahl in Längsrichtung des Rotorblatts aneinandergereihter Abschnitte mit konkav gekrümmter Längskante auf. Die Krümmung der Längskanten der einzelnen Abschnitte ergibt in ihrer Gesamtheit eine stetig konkav gekrümmte Längskante des Heizelements.

In einer Ausgestaltung ist die Breite in Abhängigkeit von der Radiusposition eine streng konvexe Funktion. Das bedeutet, dass der Graph der Funktion unterhalb jeder Verbindungsstrecke zweier seiner Punkte liegt. Durch diese spezielle Wahl des Verlaufs der Breite wird ebenfalls eine besonders bedarfsgerechte Verteilung der Heizleistung erreicht. Bei geeigneter Wahl der Funktion kann insbesondere erreicht werden, dass die flächenspezifische Heizleistung linear mit der Radiusposition zunimmt.

In einer Ausgestaltung ist das Heizelement an einer Saugseite des Rotorblatts angeordnet. In einer weiteren Ausgestaltung ist ein weiteres Heizelement vorhanden, das an einer Druckseite des Rotorblatts angeordnet ist. Grundsätzlich kann das Heizelement der Erfindung auch im Bereich der Profilnasenkante über Druck- und Saugseite verteilt angeordnet sein. Die Verwendung getrennter Heizelemente für Druck- und Saugseite ermöglicht zusätzlich eine getrennte Stromversorgung und dadurch eine individuelle Leistungsanpassung an die auf Druck- und Saugseite verschiedenen Strömungsverhältnisse.

In einer Ausgestaltung weist das Heizelement ein Kohlenstofffasermaterial auf. Grundsätzlich kann das Heizelement aus einem beliebigen Material hergestellt sein, das eine geeignete elektrische Leitfähigkeit aufweist. Ein Kohlenstofffasermaterial, insbesondere in Form eines Gewebes oder Geleges mit gleichmäßiger Dicke, weist vorteilhafte elektrische Eigenschaften für die Verwendung als Heizelement auf und kann zudem besonders gut in die Herstcllungsprozcsse des Rotorblatts, welches in der Regel aus einem faserverstärkten Kunststoffmaterial besteht, integriert werden bzw. mit einem solchen Rotorblatt verbunden werden.

Nachfolgend wird die Erfindung anhand von in Figuren dargestellten Ausführungsbeispielen näher erläutert. Es zeigen:

Fig. 1 ein erfindungsgemäßes Windenergieanlagenrotorblatt in einer schematischen Draufsicht auf die Druckseite,

Fig. 2 einen Querschnitt durch das Rotorblatt aus Fig. 1 entlang der in Fig. 1 mit A-A bezeichneten Schnittebene,

Fign. 3 und 4 Diagramme zum Verlauf der Breite und der elektrischen Leistung des Heizelements pro Flächeneinheit über die Radiusposition.

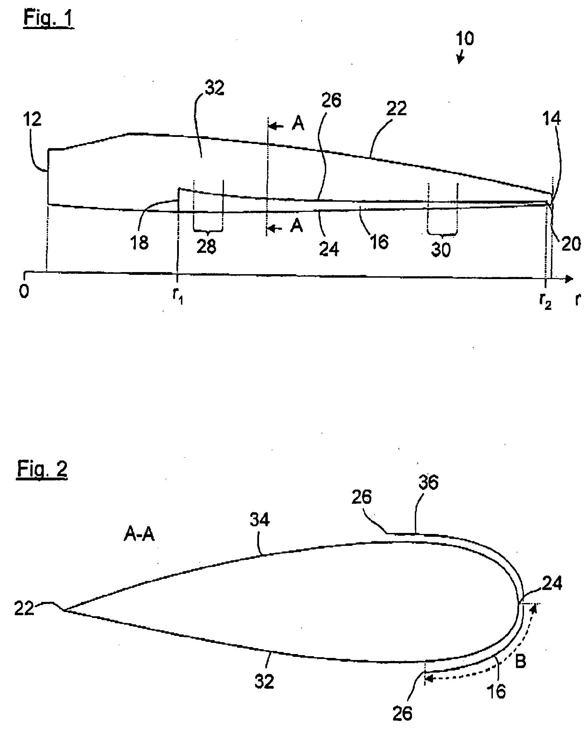

Fig. 1 zeigt ein Windenergieanlagenrotorblatt 10 mit einer Blattwurzel 12 und einer Blattspitze 14. Das Rotorblatt weist eine Profilnasenkante 24 und eine Profilendkante 22 auf.

Mit dem Windenergieanlagenrotorblatt 10 verbunden ist ein elektrisches Heizelement 16, das ein blattwurzelseitiges Ende 18 und ein blattspitzenseitiges Ende 20 aufweist. Das blattwurzelseitige Ende 18 ist an einer ersten Radiusposition $r_1$, in einem Abstand von einigen Metern von der Blattwurzel 12, angeordnet. Das blattspitzenseitige Ende 20 ist an einer zweiten Radiusposition $r_2$ nahe der Blattspitze 14 angeordnet. Das elektrische Heizelement 16 erstreckt sich in Breitenrichtung etwa von der Profilnasenkante 24 auf der dem Betrachter zugewandten Druckseite 32 des Rotorblatts bis zu einer konkav gekrümmten Hinterkante 26.

Zur Veranschaulichung beispielhaft aus dem elektrischen Heizelement 16 herausgegriffen sind ein erster Abschnitt 28 und ein zweiter Abschnitt 30. Der erste Abschnitt 28 befindet sich näher an dem blattwunelseitigen Ende 18 des elektrischen Heizelements 16 als der zweite Abschnitt 30. Man erkennt, dass die Breite des elektrischen Heizelements 16 in dem ersten Abschnitt 28 mit zunehmender Radiusposition r schneller abnimmt als in dem zweiten Abschnitt 30.

Fig. 2 zeigt einen Querschnitt durch das Windenergieanlagenrotorblatt aus Fig. 1, in dem die entsprechend dem aerodynamischen Profil der Bruchseite 32 gekrümmte Anordnung des elektrischen Heizelements 16 erkennbar ist. Ebenfalls dargestellt ist, wie die Breite B des Heizelements 16 gemessen wird, nämlich dieser Krümmung folgend. Das elektrische Heizelement 16 befindet sich im Wesentlichen auf der Druckseite 32 des Rotorblatts 10. Es beginnt etwa an der Profilnasenkante 24 und erstreckt sich von dort ein Stück weit zu der Profilendkante 22 hin. Die konkav gekrümmten Hinterkante 26 des Heizelements 16 befindet sich in etwa dort, wo das Profil seine größte Dicke erreicht. Ein weiteres Heizelement 36 ist an der Saugseite 34 angeordnet. Es beginnt ebenfalls etwa an der Profilnasenkante 24 und ist dort gegenüber dem Heizelement 16 elektrisch isoliert. Es erstreckt sich weniger weit zur Profilendkante 22 hin als das Heizelement 16. Grund hierfür ist, dass wegen der Strömungsverhältnisse am Rotorblatt die vereisungsgefährdeten Bereiche auf der Saugseite 34 weiter nach hinten reichen als auf der Druckseite 32. Außerdem können Vereisungen auf der Saugseite 34 schneller zu einer Strömungsablösung führen und die aerodynamische Leistung stärker mindern als auf der Druckseite 32.

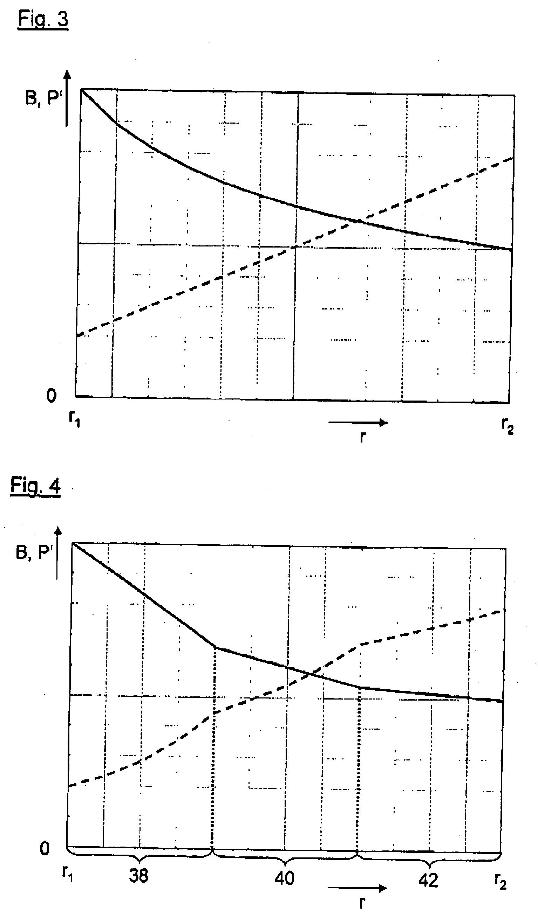

Fig. 3 zeigt in einem Diagramm den Verlauf der Breite B und der elektrischen Leistung P' pro Flächeneinheit des Heizelements 16 über die Radiusposition r. Die durchgezogen dargestellte Linie gibt den Verlauf der Breite B wieder, die gestrichelte Linie denjenigen der Leistung P' pro Flächeneinheit. Man erkennt, dass die durchgezogene Linie, also die Breite B in Abhängigkeit von der Radiusposition r, eine streng konvexe Funktion ist: verbindet man zwei beliebige Punkte dieser Kurve durch eine Gerade, befinden sich sämtliche zwischen den beiden Punkten liegende Punkte des Graphen unterhalb der Geraden. Außerdem erkennt man, dass die Breite mit zunehmender Radiusposition kontinuierlich abnimmt, wobei die Geschwindigkeit dieser Abnahme mit zunehmender Radiusposition abnimmt.

Die in der Fig. 3 dargestellte Leistung P' pro Flächeneinheit steigt hingegen von der Radiusposition $r_1$ zur Radiusposition $r_2$ hin linear an und ist somit an den näherungsweise linear zunehmenden Heizleistungsbedarf optimal angepasst.

Fig. 4 zeigt eine Alternative für ein gut an den Heizleistungsbedarf angepasstes elektrisches Heizelement 16, das ohne gekrümmte Kanten auskommt. Es besteht aus drei trapezförmigen Abschnitten 38, 40, 42, so dass die Breite B, wiederum dargestellt durch die durchgezogene Linie, in diesen Abschnitten jeweils mit zunehmender Radiusposition abnimmt, wobei die Geschwindigkeit dieser Abnahme im Abschnitt 38 am größten und im Abschnitt 42 am geringsten ist. Im Abschnitt 40 weist sie einen mittleren Wert auf.

Wiederum gestrichelt eingezeichnet ist in der Fig. 4 der Verlauf der Heizleistung P' pro Flächeneinheit, der sich aus der skizzierten Breite ergibt. Man erkennt, dass die Heizleistung ebenfalls kontinuierlich mit der Radiusposition zunimmt und sich dabei dem als näherungsweise optimal erkannten, linearen Verlauf aus Fig. 3 gut annähert.

Liste der verwendeten Bezugszeichen:

| 10 | Windenergieanlagenrotorblatt |
|---|---|
| 12 | Blattwurzel |
| 14 | Blattspitze |
| 16 | elektrisches Heizelement |
| 18 | blattwurzelseitiges Ende |
| 20 | blattspitzenseitiges Ende |
| 22 | Profilendkante |
| 24 | Profilnasenkante |
| 26 | konkav gekrümmte Hinterkante |
| 28 | erster Abschnitt |
| 30 | zweiter Abschnitt |
| 32 | Druckseite |
| 34 | Saugseite |
| 36 | weiteres Heizelement |
| 38, 40, 42 | Abschnitte |
| B | Breite |
| r | Radiusposition |

**Patentansprüche**

1. Windenergieanlagenrotorblatt (10) mit einer Blattwurzel (12), einer Blattspitzc (14) und einem elektrischen Heizelement (16), das ein blattwurzelseitiges Ende (18) an einer ersten Radiusposition ($r_1$) des Rotorblatts und ein blattspitzenseitiges Ende (20) an einer zweiten Radiusposition ($r_2$) des Rotorblatts aufweist und dazu ausgebildet ist, zwischen dem blattwurzelseitigen Ende (18) und dem blattspitzenseitigen Ende (20) von einem elektrischen Heizstrom durchströmt zu werden, **dadurch gekennzeichnet, dass** das Heizelement (16) eine Breite (B) aufweist, die in einem ersten Abschnitt (28) mit zunehmender Radiusposition (r) schneller abnimmt als in einem zweiten Abschnitt (30), wobei der erste Abschnitt (28) näher an dem blattwurzelseitigen Ende (18) angeordnet ist als der zweite Abschnitt (30).

2. Windenergieanlagenrotorblatt (10) nach Anspruch 1, **dadurch gekennzeichnet, dass** der erste Abschnitt und/oder der zweite Abschnitt trapezförmig sind.

3. Windenergieanlagenrotorblatt (10) nach Anspruch 2, **dadurch gekennzeichnet, dass** das Heizelement (16) eine Vielzahl von in einer Längsrichtung des Heizelementes (16) aneinandergereihten, trapezförmigen Abschnitten (38, 40, 42) aufweist.

4. Windenergieanlagenrotorblatt (10) nach Anspruch 1, **dadurch gekennzeichnet, dass** der erste Abschnitt (28) und/oder der zweite Abschnitt (30) eine konkav gekrümmten Längskante aufweist.

5. Windenergieanlagenrotorblatt (10) nach Anspruch 4, **dadurch gekennzeichnet, dass** das Heizelement (16) eine Vielzahl von in einer Längsrichtung des Rotorblatts aneinandergereihten Abschnitten mit einer konkav gekrümmten Längskante aufweist.

6. Windenergieanlagenrotorblatt (10) nach Anspruch 1 oder 4, **dadurch gekennzeichnet, dass** die Breite (B) in Abhängigkeit von der Radiusposition (r) eine streng konvexe Funktion ist.

7. Windenergieanlagenrotorblatt (10) nach einem der Ansprüche 1 bis 6, **dadurch gekennzeichnet, dass** das Heizelement (16) an einer Saugseite (34) des Rotorblatts angeordnet ist.

8. Windenergieanlagenrotorblatt (10) nach einem der Ansprüche 1 bis 7, **dadurch gekennzeichnet, dass** ein weiteres Heizelement (36) vorhanden ist, dass an einer Druckseite (32) des Rotorblatts angeordnet ist.

9. Windenergieanlagenrotorblatt nach einem der Ansprüche 1 bis 8, **dadurch gekennzeichnet, dass** das Heizelement (16) ein Kohlenstofffasermaterial aufweist.

## Claims

**1.** A wind turbine rotor blade (10) having a blade root (12), a blade tip (14) and an electrical heating element (16) which has a blade-root-side end (18) at a first radius position ($r_1$) of the rotor blade, and a blade-tip-side end (20) at a second radius position ($r_2$) of the rotor blade, and is designed for electrical heating current to flow between the blade-root-side end (18) and the blade-tip-side end (20), **characterized in that** the heating element (16) has a width (B) that decreases more rapidly in a first section (28) with increasing radius position (r) than in a second section (30), wherein the first section (28) is arranged closer to the blade-root-side end (18) than the second section (30).

**2.** The wind turbine rotor blade (10) according to claim 1, **characterized in that** the first section and/or the second section have a trapezoidal shape.

**3.** The wind turbine rotor blade (10) according to claim 2, **characterized in that** the heating element (16) has a plurality of sequential trapezoidal sections (38, 40, 42) in a longitudinal direction of the heating element (16).

**4.** The wind turbine rotor blade (10) according to claim 1, **characterized in that** the first section (28) and/or the second section (30) have a concavely curved longitudinal edge.

**5.** The wind turbine rotor blade (10) according to claim 4, **characterized in that** the heating element (16) has a plurality of sequential sections in a longitudinal direction of the rotor blade with a concavely curved longitudinal edge.

**6.** The wind turbine rotor blade (10) according to claim 1 or 4, **characterized in that** the width (B) is a strictly convex function depending on the radius position (r).

**7.** The wind turbine rotor blade (10) according to one of claims 1 through 6, **characterized in that** the heating element (16) is arranged on a suction side (34) of the rotor blade.

**8.** The wind turbine rotor blade (10) according to one of claims 1 through 7, **characterized in that** there is another heating element (36) which is arranged on a pressure side (32) of the rotor blade.

**9.** The wind turbine rotor blade according to one of claims 1 through 8, **characterized in that** the heating element (16) has a carbon fiber material.

## Revendications

**1.** Pale de rotor d'éolienne (10) dotée d'un pied de pale (12), d'une pointe de pale (14) et d'un élément chauffant électrique (16) présentant une extrémité côté pied de pale (18) en une première position radiale ($r_1$) de la pale de rotor et une extrémité côté pointe de pale (20) en une deuxième position radiale ($r_2$) de la pale de rotor, tout en étant conçu pour être traversé par un courant de chauffage électrique entre l'extrémité côté pied de pale (18) et l'extrémité côté pointe de pale (20), **caractérisée en ce que** l'élément chauffant (16) présente une largeur (B) diminuant plus rapidement dans une première section (28) avec une position radiale croissante (r) que dans une deuxième section (30), la première section (28) étant agencée plus près de l'extrémité côté pied de pale (18) que la deuxième section (30).

**2.** Pale de rotor d'éolienne (10) selon la revendication 1, **caractérisée en ce que** la première section et/ou la deuxième section sont trapézoïdales.

**3.** Pale de rotor d'éolienne (10) selon la revendication 2, **caractérisée en ce que** l'élément chauffant (16) présente une pluralité de sections trapézoïdales (38, 40, 42) juxtaposées dans une direction longitudinale de l'élément chauffant (16).

**4.** Pale de rotor d'éolienne (10) selon la revendication 1, **caractérisée en ce que** la première section (28) et/ou la deuxième section (30) présentent un bord longitudinal courbé de façon concave.

**5.** Pale de rotor d'éolienne (10) selon la revendication 4, **caractérisée en ce que** l'élément chauffant (16) présente une pluralité de sections juxtaposées dans une direction longitudinale de la pale de rotor, avec un bord longitudinal courbé de façon concave.

**6.** Pale de rotor d'éolienne (10) selon la revendication 1 ou 4, **caractérisée en ce que** la largeur (B) est une fonction strictement convexe dépendante de la position radiale (r).

**7.** Pale de rotor d'éolienne (10) selon l'une des revendications 1 à 6, **caractérisée en ce que** l'élément chauffant (16) est agencé sur un côté aspiration (34) de la pale de rotor.

**8.** Pale de rotor d'éolienne (10) selon l'une des revendications 1 à 7, **caractérisée en ce qu'**il est prévu un autre élément chauffant (36) agencé sur un côté pression (32) de la pale de rotor.

**9.** Pale de rotor d'éolienne (10) selon l'une des revendications 1 à 8, **caractérisée en ce que** l'élément chauffant (16) présente un matériau en fibres de carbone.

## Fig. 1

## Fig. 2

A-A

Fig. 3

Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 6145787 A
- WO 2010028653 A2
- WO 2011127997 A1
- WO 2007138452 A2
- US 6612810 B1